# EUROPEAN PATENT APPLICATION

(11) **EP 4 726 896 A1**
(43) Date of publication of application: **15.04.2026**
(21) Application number: 24915421.2
(22) Date of filing: 26.12.2024
(51) Int. Cl.: H01M 50/35, H01M 50/342, H01M 50/249, H01M 50/296

(54) **IGNITION-PREVENTED BATTERY PACK**

(30) Priority: 04.01.2024 KR 20240001658
(71) Applicant: LG Energy Solution, Ltd., Seoul 07335 (KR)
(72) Inventor: KIM, Haejin, Daejeon 34122 (KR); LEE, Jaesung, Daejeon 34122 (KR); CHOI, Jisoo, Daejeon 34122 (KR); SIN, Jehwan, Daejeon 34122 (KR)
(74) Representative: Hoffmann Eitle
(86) International application number: PCT/KR2024/021139
(87) International publication number: WO 2025/147009

(57) **Abstract**

The present invention provides a battery pack comprising a battery module and a frame accommodating the battery module, wherein the frame is provided with an exhaust unit arranged to have at least a portion thereof overlapping with the battery module in heightwise direction. the exhaust unit comprising: an inlet where a gas inside the frame is introduced into; an outlet where the gas introduced into the inlet is discharged out of the frame; and an exhaust passage extending along the frame between the inlet and the outlet.

## Description

### [TECHNICAL FIELD]

This application claims the benefit of priority based on Korean Patent Application No. 10-2024-0001658 filed on January 4, 2024, entire content disclosed in the document of the patent applications is included as a part of this specification.

The present invention relates to a structure of a battery pack having a built-in battery module capable of preventing ignition of flammable gas, and to a structure of an automobile including the same.

### [BACKGROUND ART]

Secondary batteries, which provides ease of application depending on the product group and have electrical characteristics such as high energy density, are widely applied not only to portable devices, but also to electric vehicles or hybrid vehicles driven by an electrical driving source, and power storage devices. These secondary batteries are attracting attention as a new energy source for improving eco-friendliness and energy efficiency, not only because they have the primary advantage of being able to dramatically reduce the use of fossil fuels, but also because they do not generate any by-products due to energy use.

While small mobile devices use one or two or three battery cells per device, medium to large devices such as vehicles require high output and large capacity. Therefore, a medium to large-sized battery module in which multiple battery cells are electrically connected is used. Additionally, a plurality of such battery modules may be integrated to constitute a battery pack with higher output and larger capacity.

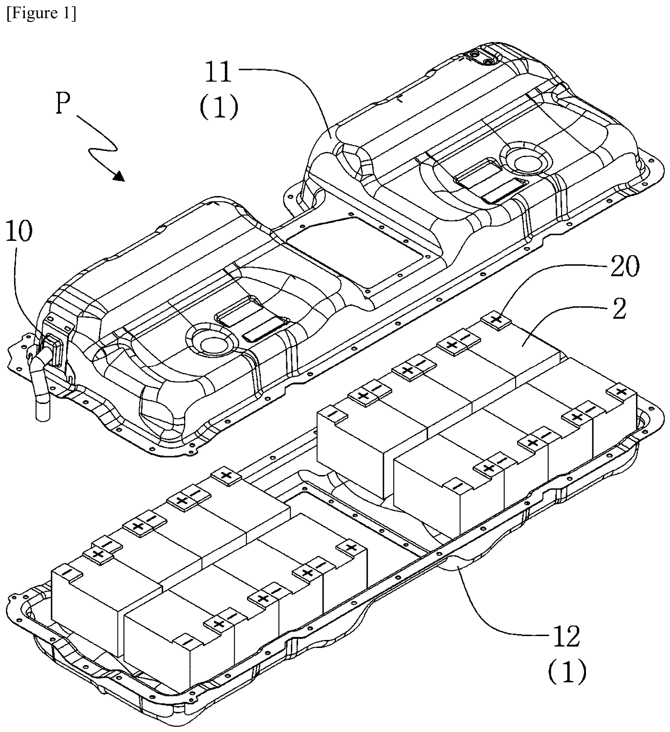

FIG. 1 illustrates a structure of a battery pack. Referring to FIG. 1, a general battery pack P installed in a vehicle, etc., includes a plurality of battery modules 2 and a frame 1 accommodating the plurality of battery modules 2. The frame 1 may include an upper frame 11 and a lower frame 12. Here, each of the plurality of battery modules 2 has a terminal 20 for electrical connection.

Meanwhile, the battery module 2 may generate flammable gas during charge and discharge or during a thermal runaway caused by a short circuit, etc. Therefore, the frame 1 is generally provided with an exhaust unit 10 to discharge such gas. Here, when mixed with oxygen and then supplied with high energy higher than the ignition point, the flammable gas discharged to the outside may be ignited as the three elements of flame are satisfied. However, even though such flammable gas is at high temperature, the flammable gas does not necessarily have sufficient energy to be ignited immediately after being discharged to out of the frame 1.

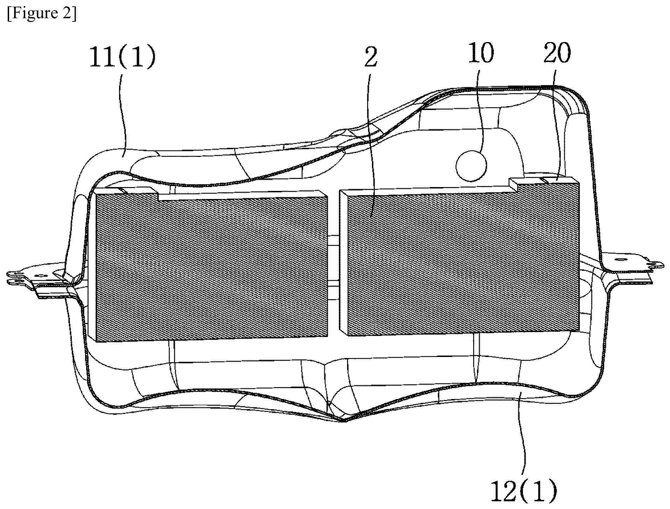

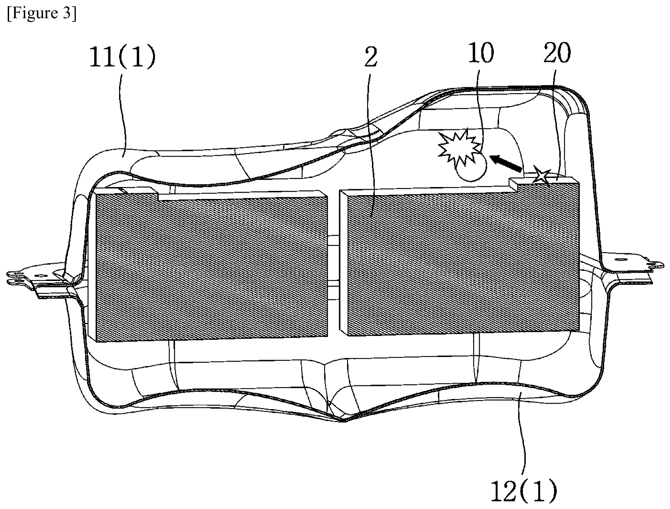

FIG. 2 illustrates a cross-section of the battery pack of FIG. 1, and FIG. 3 illustrates a spark occurring at a terminal causing an ignition of gas in the battery pack of FIG. 2. Referring to FIGS. 2 and 3, sparks may occur at the terminal 20 as high-voltage current flows through the terminal 20. Since the spark instantly generates high energy, the spark may ignite the flammable gas discharged out of the frame 1 when the flammable gas encounters oxygen.

However, the location of the exhaust unit 10 is determined according to the structure of the device such as a vehicle where the battery pack P is installed. Therefore, when the exhaust unit 10 is placed adjacent to the terminal 20 where sparks frequently occur, the battery pack P is vulnerable to ignition.

### [DISCLOSURE]

### [TECHNICAL PROBLEM]

In order to solve above-described problems of prior art, it is an object of the present invention to provide a structure of a battery pack capable of preventing ignition of flammable gas.

It is another object of the present invention to provide a structure of a battery pack with reduced risk of ignition caused by sparks while allowing freely selecting the position of the exhaust unit.

It is yet another object of the present invention to provide a structure of a battery pack capable of completely discharging gas inside the frame to the outside without the gas being trapped in a specific area.

It is yet another object of the present invention to provide a structure of a battery pack capable of setting conditions or directions of gas discharge.

The technical problems to be solved by the present invention are not limited to the objects described above, and other objects and advantages of the present invention that are not described may be understood through the following description and will be more clearly understood by the examples of the present invention. Additionally, it is apparent that the objects and advantages of the present invention may be embodied by the means and combinations thereof indicated in the claims.

### [TECHNICAL SOLUTION]

In order to solve above-described problems, the present invention provides a battery pack comprising a battery module and a frame accommodating the battery module, wherein the frame is provided with an exhaust unit arranged to have at least a portion thereof overlapping with the battery module in heightwise direction. the exhaust unit comprising: an inlet where a gas inside the frame is introduced into; an outlet where the gas introduced into the inlet is discharged out of the frame; and an exhaust passage extending along the frame between the inlet and the outlet.

The battery pack according to the present invention may prevent the three elements of the flame from being satisfied regardless of the position of the outlet as an inlet and an outlet spaced apart from each other are provided in the exhaust unit.

The inlet and the outlet may be arranged on the same side surface of the frame. Here, the exhaust passage may extend in horizontal direction and/or vertical direction along the first side surface of the frame depending on the arrangement of the inlet and the outlet.

The inlet and the outlet may be provided on the first side surface and the second side surface of the frame, respectively. Here, the exhaust passage may extend between the first side surface and the second side surface of the frame. Specifically, the exhaust passage may extend in bent manner along the first side surface and the second side surface of the frame, or may extend across between the first side surface and the second side surface of the frame.

The exhaust passage may recessed inward from the first side surface of the frame. Specifically, according to an embodiment of the present invention, the exhaust unit includes a bracket recessed inward from the first side surface of the frame, and the bracket may define at least a portion of the exhaust passage.

Here, the inlet, which may be open in a direction intersecting the extending direction of the exhaust passage, may be provided in the bracket. Specifically, the inlet may be a hole perforating the bracket in the direction intersecting the extending direction of the exhaust passage.

According to an embodiment of the present invention, the exhaust passage may extend in horizontal direction along the first side surface of the frame, and the inlet may be open in downward direction or in upward direction. Accordingly, the inlet and the outlet may be arranged horizontally apart from each other.

A terminal may be provided in the battery module.

The inlet may be arranged to avoid the terminal.

According to an embodiment of the present invention, the terminal is arranged in lengthwise direction along one widthwise end or two widthwise ends of the frame, and accordingly, the inlet may be provided at the widthwise center of the lengthwise end of the frame.

According to an embodiment of the present invention, the outlet is located at the widthwise end of the lengthwise end of the frame adjacent to the terminal, and accordingly, the exhaust passage may extend in the widthwise direction between the inlet and the outlet along the lengthwise end of the frame.

The inlet may be open in a direction to avoid the terminal.

According to an embodiment of the present invention, the terminal is provided inside the frame adjacent to an upper end of the frame, and accordingly, the inlet may be open in downward direction.

The frame may include a protrusion protruding in upward direction. Here, the outlet may perforate the protrusion. As the gas generated inside the frame 1 ascends and convects, the gas may be guided to flow to the outlet.

An exhaust tube extending out of the frame may be connected to the outlet to guide the flow of gas discharged from the frame

The outlet may be sealed by a membrane that ruptures at a predetermined pressure or temperature. The membrane may be attached to the surface of the frame while covering the outside of the outlet, for example, with an adhesive material that is released at a predetermined temperature or pressure. Accordingly, the outlet may be opened at a desired pressure or temperature.

The present invention also provides a structure of a vehicle including the battery pack. The battery pack may be built into a vehicle as a power source. The vehicle may be a hybrid vehicle or an electric vehicle. In addition, the vehicle may be a two-wheeled vehicle or a four-wheeled vehicle. However, the structure of the vehicle is not limited to the above, and the battery pack does not necessarily have to serve as a power source of the vehicle.

The battery pack may be placed by considering the effect of gas exhausted through the exhaust unit on other components built into the vehicle. For example, the battery pack may be placed such that the outlet avoids a location or direction in which other components are provided within the vehicle. Alternatively, the battery pack may be placed by considering the location of other components to which the exhaust tube is connected.

### [ADVANTAGEOUS EFFECTS]

The present invention may provide a structure of a battery pack capable of preventing the ignition of flammable gas by separating the location where oxygen begins to be mixed with the flammable gas from the location where the spark occurs.

In a battery pack according to an embodiment of the present invention, ignition of the gas may be prevented even when the outlet is adjacent to a location where sparks frequently occur by placing the inlet regardless of the location of the outlet of the exhaust unit.

The present invention may also provide a structure of a battery pack capable of discharging the gas to the outside without being stagnated or trapped in a specific area in the frame.

The present invention may also advantageously provide a structure of a battery pack capable of starting the discharge of gas at a desired pressure or temperature, and controlling the flow direction the discharged gas.

In addition, the present invention may have various other effects, and the descriptions thereof will be given in each embodiment, or the description of the effects that may be easily inferred by a person skilled in the art will be omitted.

### [BRIEF DESCRIPTION OF DRAWINGS]

FIG. 1 illustrates a structure of a battery pack.
FIG. 2 illustrates a cross-section of the battery pack of FIG. 1.
FIG. 3 illustrates a spark occurring at a terminal causing an ignition of gas in the battery pack of FIG. 2.
FIG. 4 illustrates a structure of a battery pack according to an embodiment of the present invention.
FIG. 5 illustrates a structure of an exhaust unit according to an embodiment of the present invention.
FIG. 6 illustrates a cross-section of a battery pack according to an embodiment of the present invention.
FIG. 7 illustrates a spark occurring at a terminal in the battery pack of FIG. 5.
FIG. 8 illustrates a location of an outlet according to an embodiment of the present invention.
FIG. 9 illustrates an exterior of an exhaust tube according to an embodiment of the present invention.
FIG. 10 illustrates a cross-section of an exhaust unit according to an embodiment of the present invention.
FIG. 11 illustrates a vehicle including a battery pack according to an embodiment of the present invention.

### [DESCRIPTION OF REFERENCE NUMERALS]

1: frame
   10: exhaust unit
   100: bracket
   101: inlet
   102: exhaust passage
   103: outlet
   11: upper frame
   110: protrusion
   12: lower frame
2: battery module
   20: terminal
   30: membrane
   310: exhaust tube
   311: gasket
P: battery pack
V: vehicle

### [DETAILED DESCRIPTION OF THE PREFERRED EMBODIMENTS]

The above-described objects, features and advantages will be described in detail hereinafter with reference to the accompanying drawings such that those skilled in the art will be able to implement the technical idea of the present invention. In describing the present invention, when it is determined that a detailed description of prior art related to the present invention unnecessarily obscures the gist of the present invention, the detailed description thereof will be omitted. Hereinafter, preferred embodiments according to the present invention will be described in detail with reference to the accompanying drawings. In the drawings, identical reference numerals are used for indicating identical or similar components.

While "first", "second", etc. are used to describe various elements, these elements are of course not limited by these terms. These terms are only used to distinguish one element from another, and unless specifically stated otherwise, a first element may also be a second element.

Throughout the specification, unless stated otherwise, each element may be singular or plural.

Hereinafter, "arranging an element at upper portion (or lower portion) of an element" or "arranging an element at top (or bottom) of an element" refers to not only "arranging an element to be in contact with upper surface (or lower surface)" but also to "arranging an element above upper surface (or lower surface) with another element interposed therebetween."

Additionally, when an element is described as being "connected to," "coupled with," or "in contact with" another element, it should be understood that the element may be "directly connected to," "directly coupled with," or "directly in contact with" another element, or the element may be "connected to," "coupled with," or "in contact with" another element with yet another element interposed therebetween or via yet another element.

The expressions in singular form used herein include expressions in plural form unless the context explicitly dictates otherwise. Terms such as "consists of" or "comprises" used herein should not be construed as necessarily including all of the elements or steps described in the specification, and should be construed as not including some of the elements or steps, or including additional elements or steps.

Throughout the specification, "A and/or B" refers to A, B or A and B unless specifically stated otherwise, and "C to D" refers to from equal to or higher than C to equal to or lower D unless specifically stated otherwise.

Hereinafter, preferred embodiments of the present invention will be described with reference to the accompanying drawings.

### [GENERAL STRUCTURE OF BATTERY PACK]

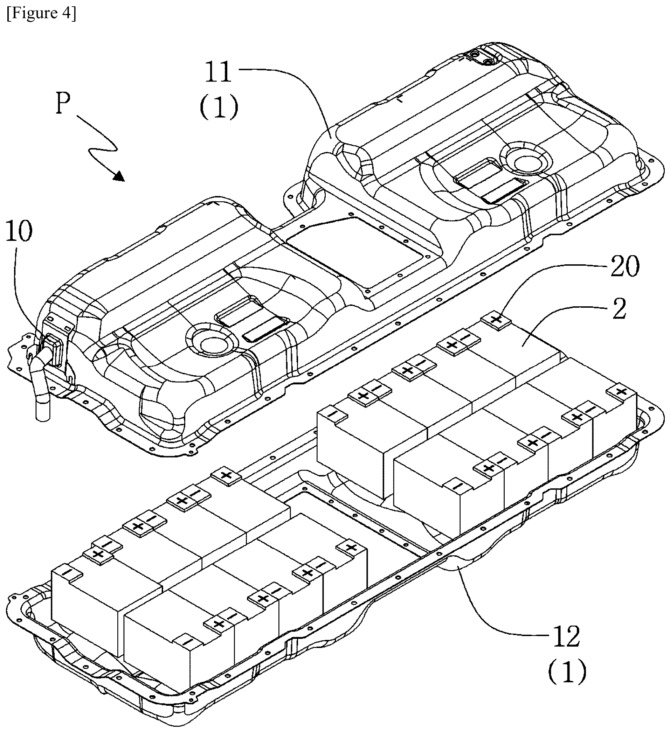

Hereinafter, with reference to FIG. 4, a general structure of a battery pack according to an embodiment of the present invention will be described.

FIG. 4 illustrates a structure of a battery pack according to an embodiment of the present invention. Referring to FIG. 4, a battery pack P according to an embodiment of the present invention may include a plurality of battery modules 2 having terminals 20 and a frame 1 accommodating the same. The frame 1 may include an upper frame 11 and a lower frame 12.

An exhaust unit 10 may be provided in the frame 1 through which gas generated from the battery module 2 may be discharged. According to an embodiment of the present invention, the exhaust unit 10 may be provided in the upper frame 11.

### [SHAPE AND LOCATION OF INLET AND EXHAUST PASSAGE]

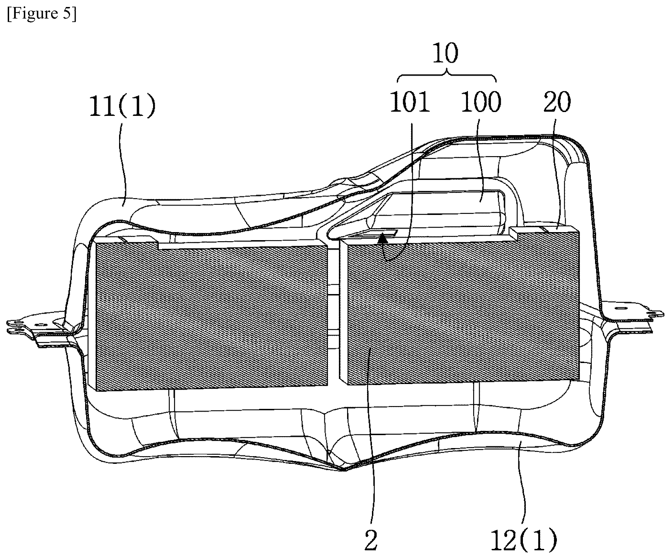

Hereinafter, with reference to FIGS. 5 to 7, the shape and location of an inlet and exhaust passage of the exhaust unit according to an embodiment of the present invention will be described in detail, and the effect of preventing ignition of gas resulting therefrom will be described.

FIG. 5 illustrates a structure of an exhaust unit according to an embodiment of the present invention. Referring to FIG. 5, the exhaust unit 10 according to an embodiment of the present invention may include an inlet 101, an outlet 103 and an exhaust passage 102 extending between the inlet 101 and the outlet 103.

Through the inlet 101, gas generated inside the frame 1 may be introduced into the exhaust unit 10, and through the outlet 103, gas introduced into the exhaust unit 10 may be discharged outside the frame 1.

According to an embodiment of the present invention, since the inlet 101 and the outlet 103 are spaced apart from each other with the exhaust passage 102 therebetween, the location of the inlet 101 may be selected independently from that of the outlet 103.

The inlet 101 and the outlet 103 may be arranged on the same side surface of the frame 1. Here, the exhaust passage 102 may extend in horizontal direction and/or vertical direction along the first side surface of the frame 1 depending on the arrangement of the inlet 101 and the outlet 103.

The inlet 101 and the outlet 103 may be provided on the first side surface and the second side surface of the frame 1, respectively. Here, the exhaust passage 102 may extend between the first side surface and the second side surface of the frame 1. Specifically, the exhaust passage 102 may extend while being bent along the first side surface and the second side surface of the frame 1, or may extend across the first side surface and the second side surface of the frame 1.

The exhaust unit 10 may include a bracket 100 recessed inward from the first side surface of the frame 1. Here, the inlet 101 may be a hole penetrating the bracket 100. In addition, the exhaust passage 102 may be at least partially defined by the bracket 100. Since the inlet 101 is provided in the bracket 100, the extending direction of the inlet 101 may be selected to be different from the normal direction of the frame 1.

Alternatively, the inlet 101 may be a hole perforated in the frame 1. In addition, the exhaust passage 102 may be at least partially defined by the frame 1.

According to an embodiment of the present invention, the outlet 103 may be provided on the first side surface of the frame 1, and the inlet 101 may be a hole perforated in the bracket 100 that is recessed inward from the first side surface. In such case, the exhaust passage 102 may be partially defined by the bracket 100, the rest by the frame 1, and may extend in a direction intersecting the extending direction of the inlet 101. Specifically, the inlet 101 may extend in vertical direction, and the exhaust passage 102 may extend in horizontal direction.

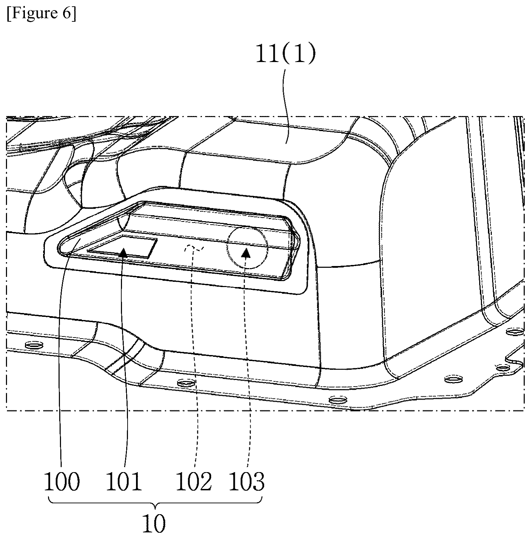

FIG. 6 illustrates a cross-section of a battery pack according to an embodiment of the present invention. Referring to FIG. 6, the inlet 101 may be provided at a location avoiding the terminal 20 and/or in a direction avoiding the terminal 20.

According to an embodiment of the present invention, the terminals 20 are arranged in lengthwise direction along one widthwise end or two widthwise ends of the frame 1. Accordingly, the inlet 101 may be provided at the widthwise center of the lengthwise end of the frame 1.

In addition, according to an embodiment of the present invention, the terminal 20 is provided inside the frame adjacent to an upper end of the frame 1. Accordingly, the inlet 101 may be open in downward direction.

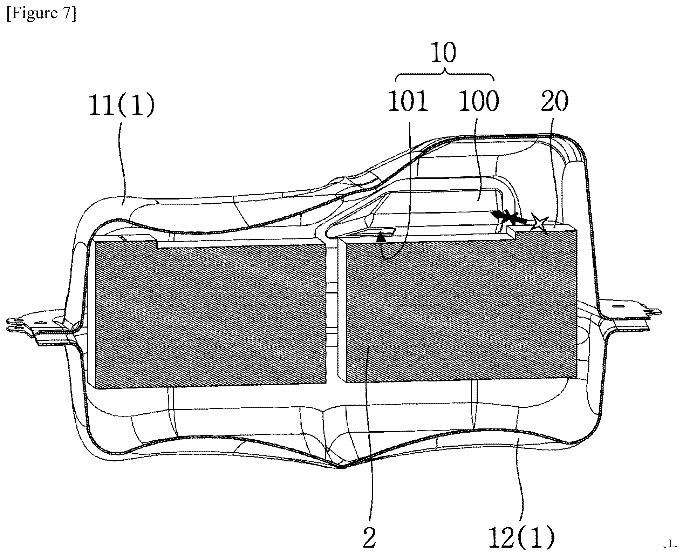

FIG. 7 illustrates a spark occurring at a terminal in the battery pack of FIG. 5. Referring to FIG. 7, since the inlet 101 is provided at a location avoiding the terminal 20, it is difficult for the gas flowing into the exhaust unit 10 to ignited by a spark that may occur at the terminal 20. In addition, even when the gas encounters the spark at the inlet 101 located at the first end of the exhaust passage 102, the region where the gas and oxygen are mixed is the outlet 103 located at the second end of the exhaust passage 102 such that the three elements of the flame, oxygen, fuel and energy above the ignition point are satisfied neither at the inlet 101 nor at the outlet 103.

That is, the exhaust unit 10 according to an embodiment of the present invention may prevent ignition of a flammable gas by isolating the region where the spark occurs from the region where oxygen is mixed, with the exhaust passage 102 therebetween.

### [STRUCTURE OF OUTLET]

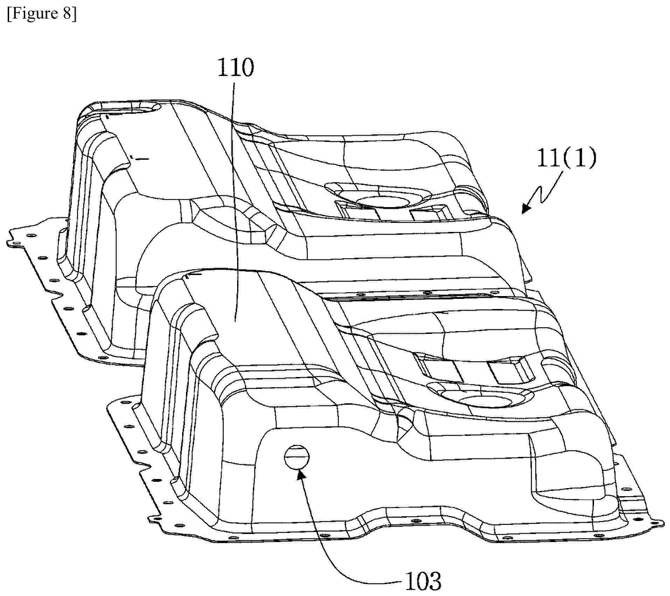

Hereinafter, with reference to FIGS. 8 to 10, the structure of the outlet of the exhaust unit according to an embodiment of the present invention will be described in detail.

FIG. 8 illustrates a location of an outlet according to an embodiment of the present invention. Referring to FIG. 8, the outlet 103 is located at the widthwise end of the lengthwise end of the frame 1 adjacent to the terminal, and accordingly, the exhaust passage 102 may extend in widthwise direction between the inlet 101 and the outlet 103 along the lengthwise end of the frame 1.

According to an embodiment of the present invention, despite the outlet 103 being located adjacent to the terminal 20 where sparks frequently occur, sparks are prevented from being generated in the exhaust unit 10 where oxygen is mixed with the exhaust gas as the inlet 101 is distant from the terminal 20, thereby preventing flames from being generated.

The frame 1 may include a protrusion 110 protruding in upward direction. Here, the outlet 103 may perforate the protrusion 110. As the gas generated inside the frame 1 ascends and convects, the gas may be guided to flow to the outlet 103 without being trapped or stagnated inside the frame 1.

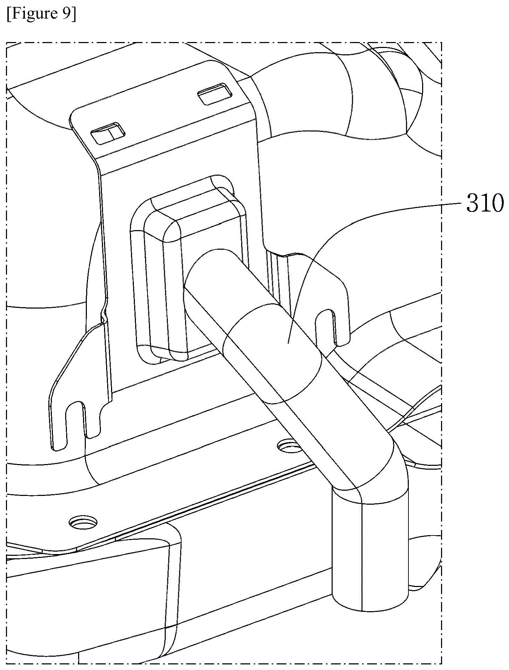

FIG. 9 illustrates an exterior of an exhaust tube according to an embodiment of the present invention. Referring to FIG. 9, an exhaust tube 310 extending out of the frame 1 is connected to the outlet 103 to guide the flow of gas discharged from the frame 1. As described below, the exhaust tube 310 may be connected to a predetermined location in a vehicle in which a battery pack P is installed.

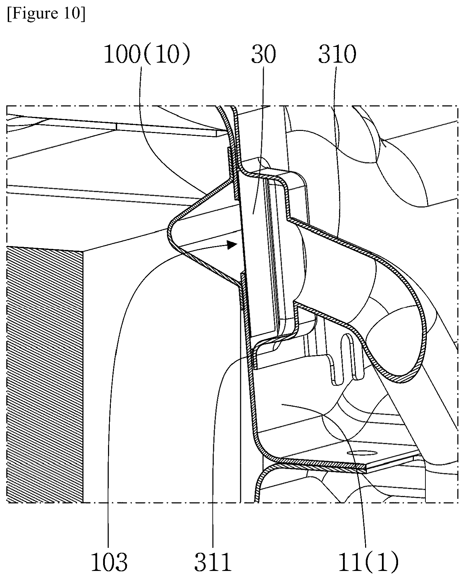

FIG. 10 illustrates a cross-section of an exhaust unit according to an embodiment of the present invention. Referring to FIG. 10, the gap between the surface of the frame 1 and the exhaust tube 310 may be sealed by a gasket 311. Accordingly, oxygen is prevented from entering the gap between the surface of the frame 1 and the exhaust tube 310, and the possibility of ignition may be reduced.

The outlet 103 may be sealed by a membrane 30 that ruptures at a predetermined pressure or temperature. The membrane 30 may be attached to the surface of the frame 1 while covering the outside of the outlet 103, for example, with an adhesive material that is released at a predetermined temperature or pressure. Accordingly, the outlet 103 may be opened at a desired pressure or temperature. The desired pressure or temperature that triggers the opening of the outlet 103 may be selected considering the condition that the gas generated inside the frame 1 should be discharged even at the risk of ignition due to the mixing of oxygen.

### [VEHICLE INCLUDING BATTERY PACK]

The present invention also provides a structure of a vehicle including the battery pack P.

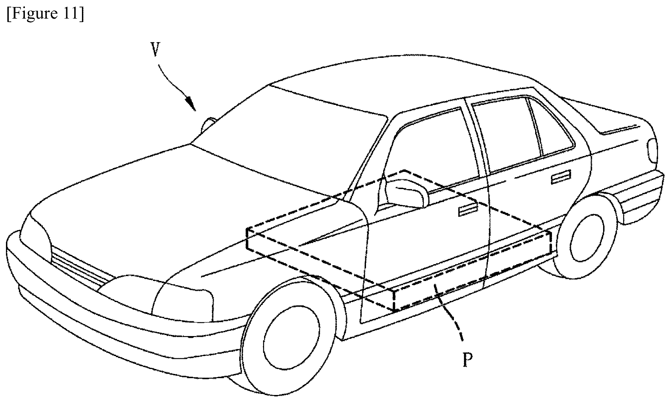

Hereinafter, with reference to FIG. 11, a structure of a vehicle including a battery pack according to an embodiment of the present invention will be described.

FIG. 11 illustrates a vehicle including a battery pack according to an embodiment of the present invention. Referring to FIG. 16, the battery pack P may be built into a vehicle V as a power source. The vehicle V may be a hybrid vehicle or an electric vehicle, but is not limited thereto. In addition, the vehicle V may be a two-wheeled vehicle or a four-wheeled vehicle, but is not limited thereto.

The battery pack P may be placed by considering the effect of gas exhausted through the exhaust unit 10 on other components built into the vehicle V. For example, the battery pack P may be placed such that the outlet 103 avoids a location or direction in which other components are provided within the vehicle V. Alternatively, the battery pack P may be placed by considering the location of other components to which the exhaust tube 310 is connected.

It should be understood that the described embodiments are illustrative in all respects and not restrictive, and the scope of the present invention will be indicated by the following claims rather than the described detailed description. And the meaning and scope of the claims to be described later, as well as all changes and modifications derived from the equivalent concept should be interpreted as being included in the scope of the present invention.

Although the present invention has been described with reference to the exemplified drawings, it is to be understood that the present invention is not limited to the embodiments and drawings disclosed in this specification, and those skilled in the art will appreciate that various modifications are possible without departing from the scope and idea of the present invention. Further, although the operating effects according to the configuration of the present invention are not explicitly described while describing an embodiment of the present invention, it should be appreciated that predictable effects are also to be recognized by the configuration.

## Claims

1. A battery pack comprising a battery module and a frame accommodating the battery module,
wherein the frame is provided with an exhaust unit arranged to have at least a portion thereof overlapping with the battery module in heightwise direction.
the exhaust unit comprising:
an inlet where a gas inside the frame is introduced into;
an outlet where the gas introduced into the inlet is discharged out of the frame; and
an exhaust passage extending along the frame between the inlet and the outlet.

2. The battery pack of claim 1, wherein the exhaust passage extends in horizontal direction along a first side surface of the frame.

3. The battery pack of claim 1, wherein the exhaust passage extends in vertical direction along a first side surface of the frame.

4. The battery pack of claim 1, wherein the inlet and the outlet are provided on a first side surface and a second side surface of the frame, respectively, and
the exhaust passage extends between the first side surface and the second side surface of the frame.

5. The battery pack of claim 1, wherein the exhaust passage is recessed inward from a first side surface of the frame.

6. The battery pack of claim 1, wherein the exhaust unit comprises a bracket recessed inward from a first side surface of the frame, and
the inlet is provided in the bracket in a direction intersecting an extending direction of the exhaust passage.

7. The battery pack of claim 6, wherein the exhaust passage extends in horizontal direction along the first side surface of the frame, and
the inlet is open in downward direction or in upward direction.

8. The battery pack of claim 1, wherein the battery module is provided with a terminal, and
the inlet is disposed at a location avoiding the terminal.

9. The battery pack of claim 8, wherein the terminal is arranged in lengthwise direction along one widthwise end or two widthwise ends of the frame, and
the inlet is provided in a widthwise center of a lengthwise end of the frame.

10. The battery pack of claim 9, wherein the exhaust passage extends in widthwise direction along the lengthwise end of the frame.

11. The battery pack of claim 1, wherein the battery module is provided with a terminal, and the inlet is open in a direction to avoid the terminal.

12. The battery pack of claim 11, wherein the terminal is provided inside the frame adjacent to an upper end of the frame, and
the inlet is open in downward direction.

13. The battery pack of claim 1, wherein the frame comprises a protrusion protruding in upward direction, and
the outlet perforates the protrusion.

14. The battery pack of claim 1, wherein the outlet is connected to an exhaust tube extending out of the frame.

15. The battery pack of claim 1, wherein the outlet is sealed by a membrane rupturing at a predetermined pressure or temperature.

16. A battery pack comprising a battery module provided with a terminal and a frame accommodating the battery module,
wherein the frame is provided with an exhaust unit.
the exhaust unit comprising:
an inlet where a gas inside the frame is introduced into;
an outlet where the gas introduced into the inlet is discharged out of the frame, the outlet being closer to the terminal than the inlet to the terminal; and
an exhaust passage extending along the frame between the inlet and the outlet.

17. A vehicle comprising a battery pack according to any one of claims 1 to 16.
